# EUROPEAN PATENT APPLICATION

(11) **EP 1 859 977 A2**
(43) Date of publication of application: **28.11.2007**
(21) Application number: 07010246.2
(22) Date of filing: 23.05.2007
(51) Int. Cl.: B60J 3/02, B60J 1/20

(54) **Assembly for moving blinds and the like, particularly in motor vehicles**

(30) Priority: 25.05.2006 IT MI20061026
(71) Applicant: AUTOTEK S.r.l., 22060 Carugo (Como) (IT)
(72) Inventor: Sinelli, Edoardo, 20040 Cornate D' Adda (IT)
(74) Representative: Alagem Modiano, Lara S.

(57) **Abstract**

An assembly (1) for moving blinds and the like, particularly in motor vehicles, comprising a supporting body (2) which can be associated with a fixed structure and accommodates means for gathering a blind (4) which is connected, at its free end, to a bar (10) supported by rod-like means (11) which are flexible if they are guided and are substantially rigid if they are loose; the rod-like means (11) interact with driving means (25) provided in the supporting body (2) and actuated by motor means (28).

## Description

The present invention relates to an assembly for moving blinds and the like, particularly in motor vehicles.

As is known, blinds are often used in motor vehicles and the like to shield sunlight, are typically provided by means of a filtering layer which winds onto a winding unit, and in the manual version are structured so that the winding unit is connected to a portion of the cabin and so as to have a hook to hold the blind in the extracted position.

In mechanized solutions in which the blind is moved by way of motor means, it is necessary to provide suitable guides, which make the structure particularly laborious and complicated.

Another problem further consists in that sticking within the guides often occurs during the sliding of the blind, with consequent jamming and failure to operate.

The aim of the invention is to solve the problem described above by providing an assembly for moving blinds and the like, particularly in motor vehicles, which allows to provide the selected movement of the blind without having to resort to sliding guides for the blind.

Within this aim, an object of the invention is to provide an assembly in which it is possible to perform easy and quick installation since the presence of guides is not required, obtaining at the same time the possibility of optimum placement for shielding against sunlight.

Another object of the present invention is to provide a blind movement assembly which thanks to its particular constructive characteristics is capable of giving the greatest assurances of reliability and safety in use.

Still another object of the present invention is to provide an assembly for moving blinds and the like which can be easily obtained starting from commonly commercially available elements and materials and is also competitive from a merely economical standpoint.

This aim and these and other objects, which will become better apparent hereinafter, are achieved by an assembly for moving blinds and the like, particularly in motor vehicles, according to the invention, characterized in that it comprises a supporting body which can be associated with a fixed structure and accommodates means for gathering a blind connected, at its free end, to a bar which is supported by rod-like means which are flexible if they are guided and are substantially rigid if they are loose, said rod-like means interacting with driving means provided in said supporting body and actuated by motor means.

Further characteristics and advantages of the present invention will become better apparent from the description of a preferred but not exclusive embodiment of an assembly for moving blinds and the like, particularly in motor vehicles, illustrated by way of non-limiting example in the accompanying drawings, wherein:
Figure 1 is a schematic view of the blind movement assembly with the blind in the retracted position;
Figure 2 is a schematic view of the blind movement assembly with the blind in the extracted position;
Figure 3 is a schematic enlarged-scale view of the driving means and of the guide for the rod-like means;
Figure 4 is a perspective view of the plates that constitute the rod-like means;
Figure 5 is a perspective view of a portion of a rod-like means;
Figure 6 is a sectional view, taken along the line VI-VI of Figure 2;
Figure 7 is a view of a constructive variation of the rod-like means;
Figure 8 is a schematic side elevation view of the possible arrangement of a blind inside the cabin of a motor vehicle;
Figure 9 is a view of a different embodiment of the blind movement assembly;
Figures 10 and 11 are views respectively of the right and left links for obtaining the rod-like means in the embodiment of Figure 8;
Figure 12 is a schematic perspective view of a portion of a rod-like means for the embodiment of Figure 9.

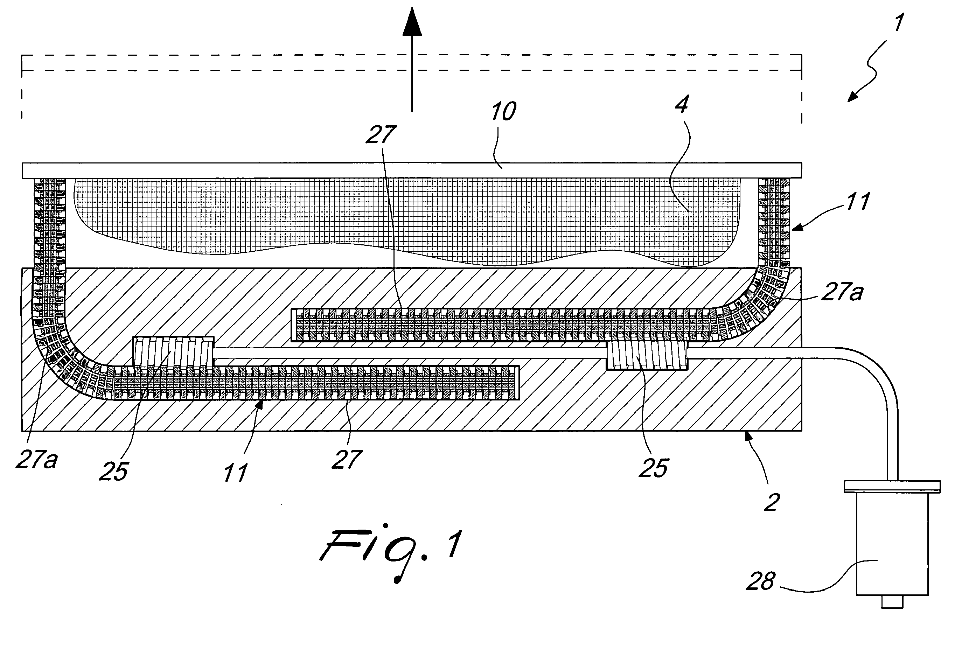

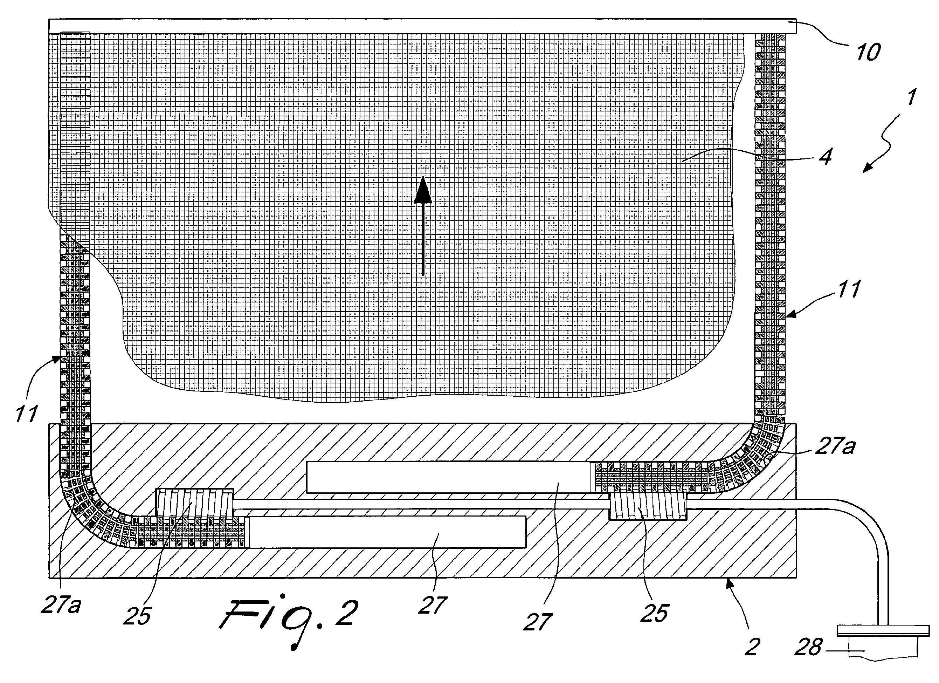

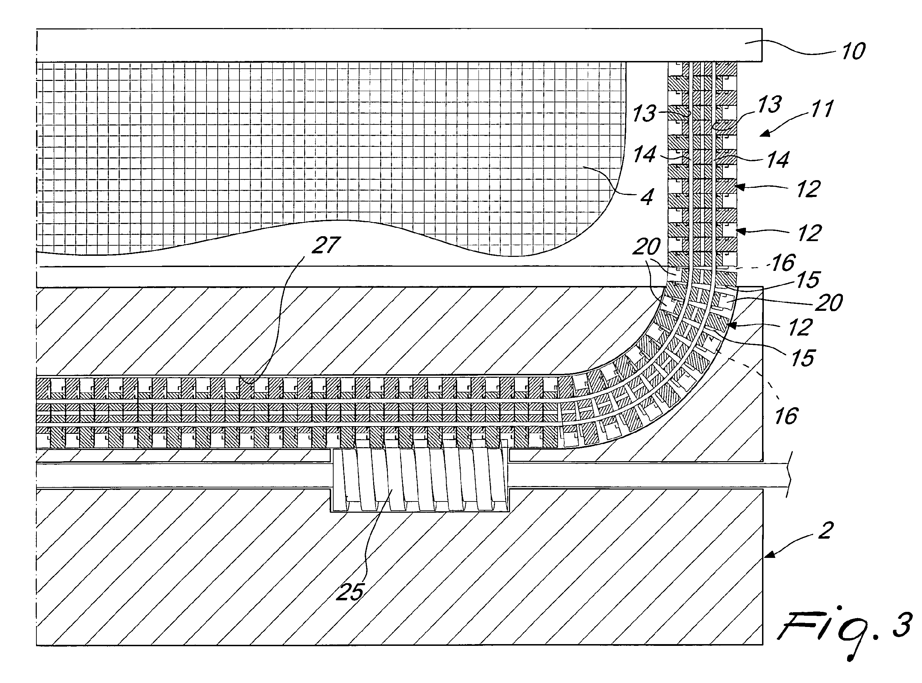

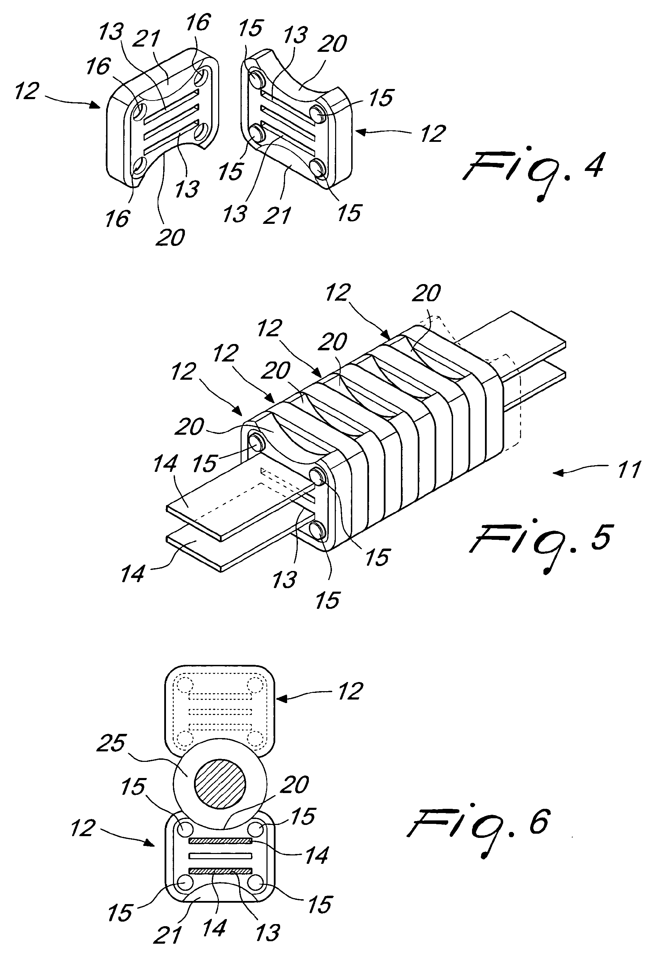

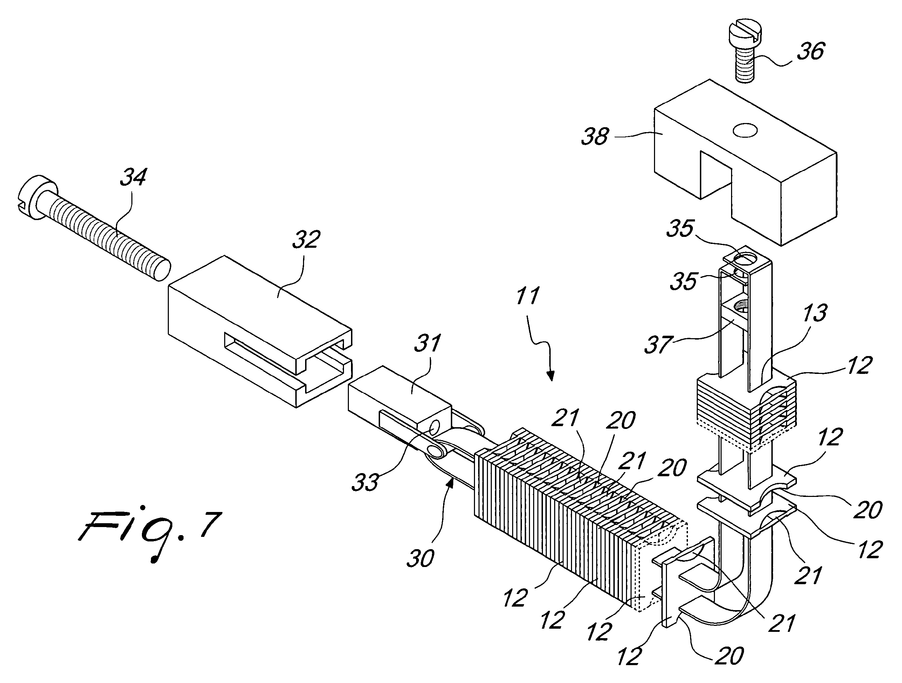

With reference to the figures, and in particular to Figures 1 to 8, the assembly for moving blinds and the like, particularly in motor vehicles, generally designated by the reference numeral 1, comprises a supporting body 2 which is associated with a fixed structure, for example inside the cabin of a motor vehicle, and is arranged at a glazed surface on which shielding is to be provided.

The means for gathering a blind 4 are provided inside the supporting body 2.

Such gathering means are constituted typically by a roller 5 with automatic rewinding, onto which the blind is gathered to be rolled up.

At its free end, the blind is connected to a bar 10 which is supported, at its ends, by rod-like means, generally designated by the reference numeral 11, which have the peculiarity of being flexible if guided and are substantially rigid when they are loose.

According to the embodiment shown in Figures 1 to 7, the rod-like means 11 are obtained by means of plates 12 which are substantially polygonal, preferably rectangular, and define one or more slots 13 for the passage of one or two flexible laminas 14.

The plates 12 have centering pins 15 on one face and centering seats 16 on the other face, so as to provide mutual coupling when the plates are adjacent to each other.

At a side which is parallel to the plane of arrangement of the lamina 14 a recess 20 is provided which is shaped like a circumferential portion, while a bevel 21 is defined on the opposite edge.

The plates 12 are mutually adjacent and packed so that the recess 20 is alternately provided on one edge and on the opposite edge, so that a plurality of recesses, which in practice define a plurality of seats, are provided on the two opposite edges of the rod-like means 11 that is formed.

Such seats are capable of interacting with driving means constituted by two oppositely oriented portions of a male worm screw 25 which is supported rotatably within the body 2 and is structured so as to engage like a thread in the recesses provided by the rod-like element, which is slidingly accommodated within guiding seats 27 defined by the supporting body 2, so that the rod-like means, with the rotation of the worm screw 25, actuated by a motor 28, perform the translational motion for moving the blind 4.

Advantageously, the seats 27 extend parallel to the bar and the rod-like means are made to exit at right angles to the bar due to the presence of an L-shaped bend 27a.

The structure that has been adopted allows to make the rod-like means flexible, so that they can bend only in a bending direction which corresponds to the direction of curvature of the L-shaped element 27a from which they are to protrude.

To achieve this characteristic it is possible to arrange, within each rod-like means, a single lamina which must be arranged in the slot which lies proximate to the inside of the curve or optionally by means of two laminas which are arranged on the opposite sides of the centerline and have mutually different lengths, so that bending is allowed only in one direction and the remaining portion that protrudes freely remains substantially rigid.

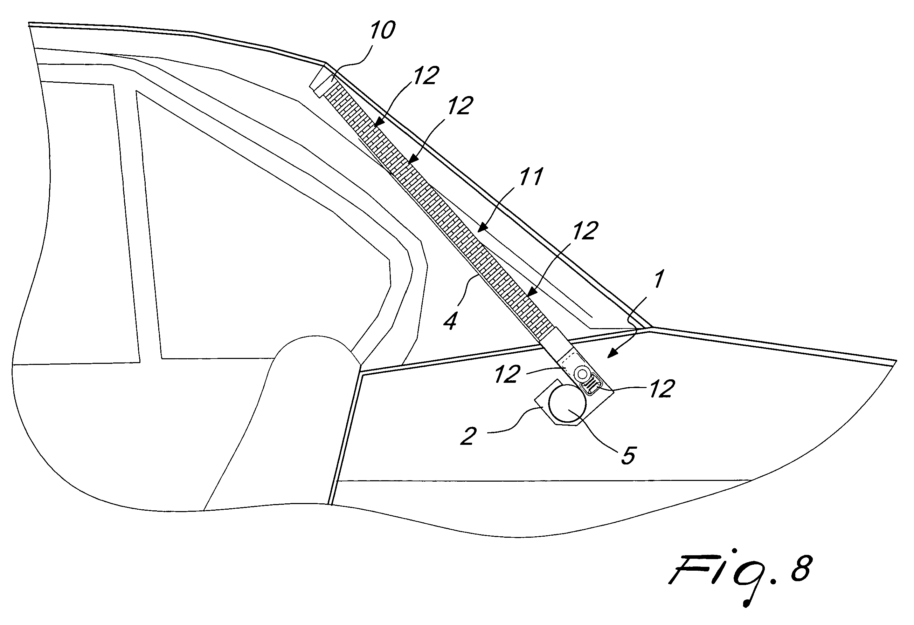

According to what is shown in Figure 8, it is possible to provide a single lamina 30, which is folded double and enters two spaced slots 13 so as to allow flexibility in a single direction.

At the folded end, the lamina 30 engages a tensioning block 31, which is guided slidingly within a guiding block 32 with no possibility of rotation.

A threaded seat 33 is provided in the block 31 and a tensioning screw 34 engages therein and engages the guiding block 32.

At the free end, the lamina 30 has folded portions with a hole 35 for the passage of a locking screw 36, which can engage a locking nut 37 and abuts against a support 38 which can be fixed to the bar 10.

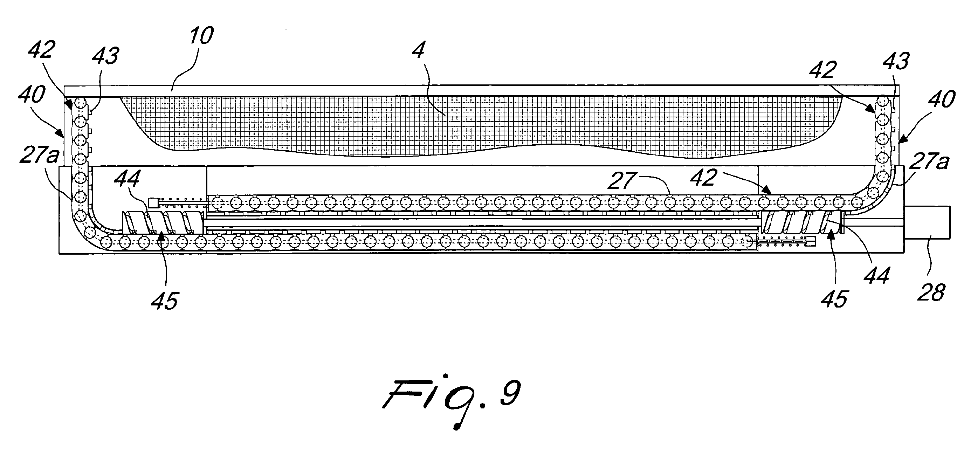

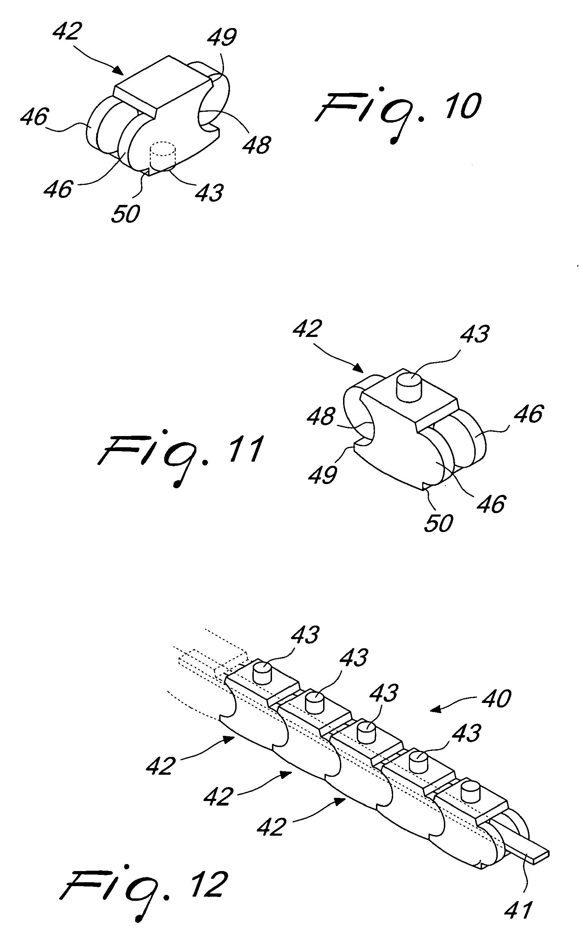

According to what is shown in Figures 9 to 12, the rod-like means, now designated by the reference numeral 40, are provided by means of a central lamina 41, which is arranged within links 42 which define, on the inner curve or on the outer curve depending on whether reference is made to the left or right rod-like means, pins 43 which engage in the oppositely oriented slots 44 of female worm screws 45.

Each link 42 defines, on one edge, circular protrusions 46 which mate with a central protrusion 47 which is defined on the opposite edge of the laterally adjacent link and is surrounded by seats 48 which are shaped complementarily with respect to the circular protrusions 46.

The seat 48 defines on the outer edge an abutment tooth 49 which abuts against a shoulder 50 arranged at the end of the protrusions 46, so as to limit the mutual outward rotation of the links while maintaining the possibility of inward rotation.

With this arrangement, it is possible to provide rod-like means which are flexible when they are guided in the guiding seats defined by the supporting body, again designated by the reference numeral 27, and are instead substantially rigid when the rod-like means are extracted and protrude from the supporting body.

With the solutions described above, therefore, it is possible to move the blind, extracting it, without the need to have guiding elements but by utilizing the rigidity of the rod-like means which, when they are made to perform a translational motion, since they are flexible if guided, can retract into the supporting body and can arrange themselves substantially parallel to the bar connected to the free end of the blind.

From what has been described above it is evident that the invention achieves the proposed aim and objects, and in particular the fact is stressed that an assembly for moving blinds and the like, particularly in motor vehicles, is provided which allows to begin the movement of a blind without having to resort to guiding elements.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application no. MI2006A001026, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An assembly for moving blinds and the like, particularly in motor vehicles, **characterized in that** it comprises a supporting body which can be associated with a fixed structure and accommodates means for gathering a blind connected, at its free end, to a bar which is supported by rod-like means which are flexible if they are guided and are substantially rigid if they are loose, said rod-like means interacting with driving means provided in said supporting body and actuated by motor means.

2. The assembly according to claim 1, **characterized in that** said blind gathering means comprise a roller with automatic rewinding.

3. The assembly according to the preceding claims, **characterized in that** each of said rod-like means is constituted by a plurality of plates which are substantially polygonal and define at least one slot for the passage of at least one flexible lamina, said plates having, at an edge which is parallel to the plane of arrangement of said lamina, a recess shaped like a circumferential portion, said plates being mutually adjacent and packed, with said recess provided alternately on one edge and on the opposite edge.

4. The assembly according to one or more of the preceding claims, **characterized in that** said plates have two slots which are arranged on opposite sides with respect to a central line.

5. The assembly according to one or more of the preceding claims, **characterized in that** said plates have centering pins on one face and, on the opposite face, centering seats for mutual coupling between mutually adjacent plates.

6. The assembly according to one or more of the preceding claims, **characterized in that** said rod-like means connected respectively to the end of said bar can be accommodated detachably in said support along directions which are substantially parallel to said bar.

7. The assembly according to one or more of the preceding claims, **characterized in that** said driving means are constituted by two male worm screws which are mutually oppositely oriented and can be engaged respectively in the recesses of one or the other of the rod-like means.

8. The assembly according to one or more of the preceding claims, **characterized in that** said supporting body defines seats for accommodating said rod-like means, said seats ending with an L-shaped bend with the protrusion of said rod-like means substantially at right angles to said bar.

9. The assembly according to one or more of the preceding claims, **characterized in that** it comprises two laminas of different lengths, which are accommodated in said slots of said plates in order to allow flexing in a single direction.

10. The assembly according to one or more of the preceding claims, **characterized in that** it comprises a single lamina which is folded double and can be inserted with its arms of different lengths in two of said slots which are mutually spaced.

11. The assembly according to one or more of the preceding claims, **characterized in that** it comprises a tensioning block which is associated with the folded end of said folded single lamina and is slidingly guided in a guiding block, means being further provided for adjusting the arrangement of said tensioning block with respect to said guiding block.

12. The assembly according to one or more of the preceding claims, **characterized in that** said rod-like means are constituted by a plurality of links which define the seat for engagement with a central lamina, said links defining respectively on the inside and outside curves, for the left or right plate-like element, pins which can engage in the oppositely oriented slots of female worm screws.

13. The assembly according to one or more of the preceding claims, **characterized in that** each of said links defines, on one edge, circular protrusions which can be mated with a central protrusion defined on the opposite edge of the laterally adjacent link, said central protrusion being surrounded by seats shaped complementarily with respect to said circular protrusions, said seat defining, on its outer edge, an abutment tooth which abuts against a shoulder arranged at the end of said circular protrusions, said shoulder being adapted to limit the rotation of said links in one direction, maintaining the possibility of rotation in the opposite direction.
